# EUROPEAN PATENT APPLICATION

(11) **EP 4 700 914 A1**
(43) Date of publication of application: **25.02.2026**
(21) Application number: 24217808.5
(22) Date of filing: 05.12.2024
(51) Int. Cl.: H01M 10/625, H01M 10/647, H01M 10/6551, H01M 10/6555, H01M 10/6557, H01M 10/6568, H01M 10/658, H01M 50/209, H01M 50/211, H01M 50/249, H01M 50/289, H01M 50/367

(54) **IMMERSED ENERGY STORAGE DEVICE AND CELL SPACER ASSEMBLY**

(30) Priority: 22.08.2024 KR 20240112926
(71) Applicant: Hanwha Aerospace Co., Ltd., Changwon-si, Gyeongsangnam-do 51542 (KR)
(72) Inventor: Kim, Won Kyeong, 51542 Changwon-si, Gyeongsangnam-do (KR); Choi, Ha Neul, 51542 Changwon-si, Gyeongsangnam-do (KR); Hwang, Joo Wan, 51542 Changwon-si, Gyeongsangnam-do (KR)
(74) Representative: Gulde & Partner

(57) **Abstract**

An immersed energy storage device (100) includes: a housing (30) having an accommodation space (35) therein; a cell stack (10) in the housing; and an insulating fluid (20) in the accommodation space, in which the cell stack is immersed, and configured to cool the cell stack, where the cell stack comprises a plurality of battery cells (15) stacked in a stacking direction, and a cell spacer assembly (40) provided between two adjacent battery cells among the plurality of battery cells, where the cell spacer assembly comprises a cooling plate (50) having a first channel (51) along a first direction of a plane perpendicular to the stacking direction of the plurality of battery cells and a second channel (52a) along a second direction of the plane, and where the first channel and the second channel are in fluid communication through a crossing position that connects the first channel and the second channel.

## Description

### CROSS-REFERENCE TO RELATED APPLICATION

This application claims priority from Korean Patent Application No. 10-2024-0112926 filed on August 22, 2024, in the Korean Intellectual Property Office, the contents of which are incorporated by reference herein in its entirety.

### BACKGROUND

### 1. Field

The present disclosure relates to a submersible energy storage device, and more particularly, to a submersible energy storage device for accommodating an insulating fluid for cooling a plurality of battery cells, and a cell spacer assembly interposed between the plurality of battery cells.

### 2. Description of the Related Art

Recently, an environmental issue such as carbon emission reduction and carbon neutrality has become a major topic in generating and using energy from various types of energy sources. Accordingly, use of storage batteries capable of storing energy and enabling secondary charging is rapidly increasing. The use of such storage batteries is expanding in various technical fields such as electric vehicles, ships, submarines, aircraft and energy storage systems (ESS).

In accordance with the development of such power storage battery technology, safety and performance are considered as the most important factors. To this end, various types of thermal runaway/transition prevention and cooling methods have been developed, and among them, submersible cooling technology has recently received attention due to its high cooling efficiency and safety.

However, the submersible cooling technology has difficulty in effectively removing or emitting heat generated from stacked battery cells. For example, unlike surrounding portions of the stacked battery cells, it is difficult for heat dissipation to be performed in a central portion of the stacked battery cells, at which it is difficult for the insulating fluid to be permeated or flown.

In addition, the submersible cooling technology also has a limitation in that the insulating fluid does not function properly even in a thermal runaway situation. When thermal runaway occurs in a specific battery cell among the stacked battery cells, high-temperature flames and gases are emitted in one direction of the stacked battery cells. At this time, heat dissipation is well performed toward the insulating fluid positioned in an emission direction of flames and gases, but is not well performed on an opposite side of the emission direction of flames and gases or in the central portion of the stacked battery cells.

When heat management in a submersible cooling device is not smoothly performed, problems in lifespan, performance and safety of the battery cell may occur. In addition, a device for forcibly circulating an insulating fluid is required separately, or a larger amount of insulating fluid should be used, whereby a problem may occur in that energy density is lowered.

### SUMMARY

Provided is a submersible energy storage device in which a temperature deviation between the inside of a battery cell and the battery cell is reduced in terms of management of heat that occurs during use of a battery.

Further provided is a submersible energy storage device that maximizes stability by using an insulating fluid in a housing as effectively as possible even in the event of a thermal runaway phenomenon.

The objects of the present disclosure are not limited to those mentioned above.. Additional aspects will be set forth in part in the description which follows and, in part, will be apparent from the description, or may be learned by practice of the presented embodiments.

According to an aspect of the disclosure, a submersible energy storage device may include: a housing having an accommodation space therein; a cell stack in the housing; and an insulating fluid in the accommodation space, in which the cell stack is immersed, and configured to cool the cell stack, where the cell stack comprises a plurality of battery cells stacked in a stacking direction, and a cell spacer assembly provided between two adjacent battery cells among the plurality of battery cells, where the cell spacer assembly comprises a cooling plate having a first channel along a first direction of a plane perpendicular to the stacking direction of the plurality of battery cells and a second channel along a second direction of the plane, where the first channel and the second channel are in fluid communication through a crossing position that connects the first channel and the second channel, and where the insulating fluid is capable of flowing in the first direction and the second direction through the first channel and the second channel respectively.

The first direction may correspond to a longitudinal direction of the cooling plate, and the second direction may correspond to a transverse direction crossing the longitudinal direction of the cooling plate.

A length of the cooling plate in the longitudinal direction may be greater than a length of the cooling plate in the transverse direction.

The cell spacer assembly may further include at least one insulator provided between the two adjacent battery cells and the cooling plate.

The at least one insulator may include a mica plate.

In the cooling plate, the first channel may include a plurality of through holes extended from a first edge surface of the cooling plate to an edge surface opposite to the first edge surface in the longitudinal direction, where the second channel includes a plurality of trench holes extended from a second edge surface of the cooling plate, orthogonal to the first edge surface, to an edge surface opposite to the second edge surface in the transverse direction, and opened toward at least one face among a first face and a second face of the cooling plate.

A gap between adjacent trench holes may be greater than a gap between adjacent through holes.

The plurality of trench holes may be opened only toward the first face among the first face and the second face.

One or more first trench holes among the plurality of trench holes may be opened toward the first face among the first face and the second face, and one or more second trench holes among the plurality of trench holes may be opened toward the second face among the first face and the second face.

The one or more first trench holes opened toward the first face and the one or more second trench holes opened toward the second face may be provided in an alternating arrangement.

The housing may include a housing body in which the cell stack and the insulating fluid are provided, and a housing cover covering an upper opening of the housing body.

The housing cover may include a gas vent configured to discharge gas generated inside the housing.

The housing body may include a plurality of cooling fins configured to exchange heat with surrounding air and protruded on at least one among a side and a lower surface of the housing body.

The cell spacer assembly may further include an elastic pad between the at least one insulator and the two adjacent battery cells.

The cooling plate may be bonded to the at least one insulator by an adhesive.

According to an aspect of the disclosure, provided is a cell spacer assembly included in a submersible energy storage device accommodating a plurality of battery cells that are stacked, and an insulating fluid for cooling the plurality of battery cells, and provided between two adjacent battery cells among the plurality of battery cells, the cell spacer assembly may include: a cooling plate including a first channel along a first direction of a plane perpendicular to a stacking direction of the plurality of battery cells and a second channel along a second direction of the plane; and at least one insulator provided between the two adjacent battery cells and the cooling plate, where the first channel and the second channel are in fluid communication through a crossing position that connects the first channel and the second channel, and where the insulating fluid is capable of flowing in the first direction and the second direction through the first channel and the second channel respectively.

The first channel may include a plurality of through holes extended from a first edge surface of the cooling plate to an edge surface opposite to the first edge surface in a longitudinal direction, where the second channel includes a plurality of trench holes extended from a second edge surface of the cooling plate, orthogonal to the first edge surface, to an edge surface opposite to the second edge surface in a transverse direction and opened toward at least one face among a first face and a second face of the cooling plate.

The plurality of trench holes may be opened only toward the first face among the first face and the second face.

One or more first trench holes among the plurality of trench holes may be opened toward the first face, and one or more second trench holes among the plurality of trench holes may be opened toward the second face among the first face and the second face.

The one or more first trench holes opened toward the first face and the one or more second trench holes opened toward the second face may be provided in an alternating arrangement.

According to an aspect of the disclosure, a storage device may include: a first battery cell and a second battery cell layered in a stacking direction; a cooling plate provided between the first battery cell and the second battery cell and comprising: a first channel along a first direction of a plane perpendicular to the stacking direction, and a second channel along a second direction of the plane orthogonal to the first direction and the stacking direction; and an insulating fluid configured to cool the first battery cell and the second battery cell and capable of flowing in the first direction and the second direction through the first channel and the second channel.

### BRIEF DESCRIPTION OF DRAWINGS

The above and other aspects and features of the present disclosure will become more apparent by describing in detail exemplary embodiments thereof with reference to the attached drawings, in which:
FIG. 1A is a perspective view illustrating a submersible energy storage device according to an embodiment of the present disclosure;
FIG. 1B is an exploded perspective view illustrating the submersible energy storage device of FIG. 1A according to an embodiment of the present disclosure;
FIG. 2 is a cross-sectional view illustrating the submersible energy storage device of FIG. 1A, which is taken along A-A' according to an embodiment of the present disclosure;
FIG. 3 is a front view illustrating a cell stack including a plurality of battery cells stacked in a specific direction according to an embodiment of the present disclosure;
FIG. 4 is an enlarged view illustrating a portion of a front view of the cell stack of FIG. 3 according to an embodiment of the present disclosure;
FIG. 5A is a front perspective view illustrating a cooling plate according to an embodiment of the present disclosure;
FIG. 5B is a plan view illustrating the cooling plate shown in FIG. 5A according to an embodiment of the present disclosure;
FIG. 5C is a side view illustrating the cooling plate shown in FIG. 5A according to an embodiment of the present disclosure;
FIG. 6A is a front perspective view illustrating a cooling plate according to an embodiment of the present disclosure;
FIG. 6B is a rear perspective view illustrating the cooling plate shown in FIG. 6A according to an embodiment of the present disclosure;
FIG. 6C is a plan view illustrating the cooling plate shown in FIG. 6A;
FIG. 6D is a side view illustrating the cooling plate shown in FIG. 6A;
FIG. 7A is a perspective view illustrating a cooling plate according to the an embodiment of the present disclosure;
FIG. 7B is a plan view illustrating the cooling plate shown in FIG. 7A according to an embodiment of the present disclosure;
FIG. 7C is a side view illustrating the cooling plate shown in FIG. 7A according to an embodiment of the present disclosure; and
FIG. 8 is a graph illustrating a thermal conduction test result of a cell spacer assembly according to one embodiment of the present disclosure in comparison with that of the related art.

### DETAILED DESCRIPTION

Advantages and features of the disclosure and methods to achieve them will become apparent from the descriptions of exemplary embodiments herein below with reference to the accompanying drawings. However, the embodiments presented are examples, and the disclosure is not limited thereto, but may be implemented in various ways. The exemplary embodiments are provided for making the disclosure thorough and for fully conveying the scope of the disclosure to those skilled in the art. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise," "include," "have," "has" and variations thereof will be understood to imply the inclusion of stated elements but not the exclusion of any other elements.

It will be understood that the terms "first", "second", or the like, may be used to distinguish one component from another, and should not be construed to limit the corresponding component in other aspects (e.g., importance or order).

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

Hereinafter, exemplary embodiments of the present disclosure will be described in detail with reference to the accompanying drawings.

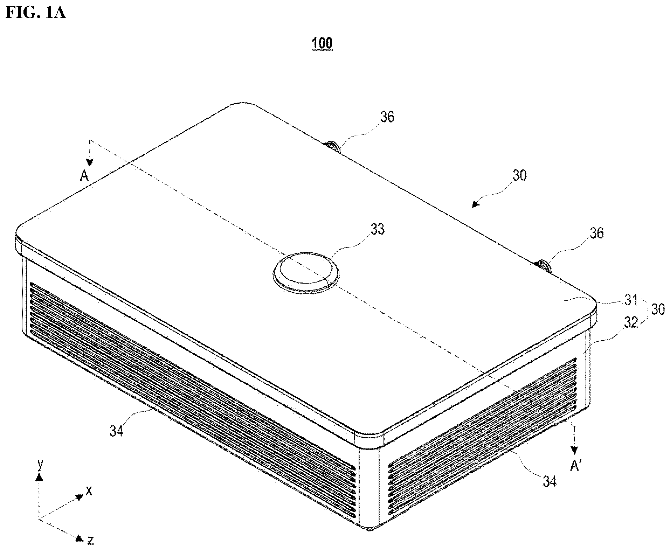

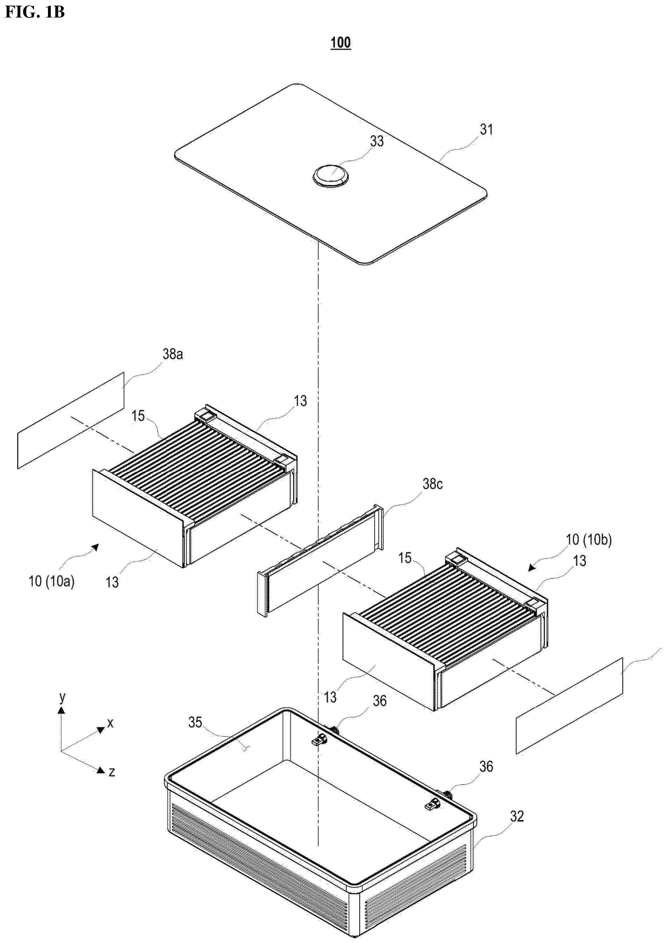

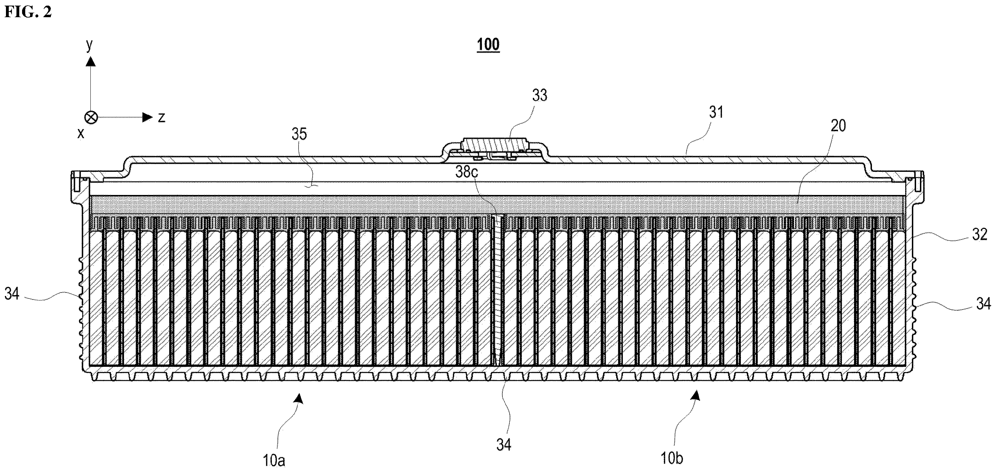

FIG. 1a is a perspective view illustrating a submersible energy storage device 100 according to an embodiment, FIG. 1B is an exploded perspective view illustrating the submersible energy storage device 100 of FIG. 1A, and FIG. 2 is a cross-sectional view illustrating the submersible energy storage device 100 of FIG. 1A, which is taken along A-A'.

The submersible energy storage device 100 may include a housing 30, one or more cell stacks 10, and an insulating fluid 20.

The housing 30 may define an accommodation space 35 therein, and accommodate other components of the submersible energy storage device 100 in the accommodation space 35. The housing 30 may be configured as one body. According to an embodiment, the housing 30 may be configured to include a housing body 32 and a housing cover 31. In this case, the housing cover 31 may be provided with a gas vent 33 for discharging off-gas generated in the cell stack 10. Accordingly, the gas vent 33 may be configured to be communicated with a buffer for collecting the off-gas generated in each of the cell stacks 10a and 10b. Furthermore, in order to discharge the off-gas generated from battery cells 15 to the outside, the gas vent 33 may be selectively opened. For example, the gas vent 33 may open only when a pressure of the off-gas is greater than or equal to a threshold value. This off-gas may be generated in large amounts when the battery cells are in a thermal runaway state.

The cell stack 10 is a unit structure for accommodating a plurality of battery cells 15 stacked by a case. Referring to FIG. 1B, although two cell stacks 10a and 10b are illustrated as being disposed in the housing 30, the number thereof may vary. The two cell stacks 10a and 10b may be disposed in the accommodation space 35 of the housing 30, particularly on a lower surface of the accommodation space 35, at a gap away from each other. A form factor of the plurality of battery cells 15 included in the cell stack 10 may have various shapes such as a square shape, a cylindrical shape and a pouch shape, but herein, the pouch type will be described as an example.

An end plate 13 may be electrically integrated and connected with the battery cell 15 and connectable to an external device. The end plate 13 may be disposed between a front wall of the housing body 32 and the battery cell 15 and between a rear wall of the housing body 32 and the battery cell 15. The end plate 13 may be connected to a cable for transmitting power generated from the battery cell 15 to the outside, and the cable may be drawn out to the outside through a connector 36 formed on a side of the housing body 32.

The plurality of battery cells 15 may be immersed in the insulating fluid 20 that fills at least a portion of the accommodation space 35. The amount of the insulating fluid 20 for filling the accommodation space 35 of the housing 30 may vary depending on a design purpose of a device. In some examples, the plurality of battery cells 15 accommodated in the submersible energy storage device 100 may be completely immersed in the insulating fluid 20.

The insulating fluid 20 is suitable for materials that have high specific heat, high thermal conductivity and a high boiling point and are robust to thermal decomposition, air oxidation, electrolysis and the like without corroding the battery cell 15 or the housing 30. Further, the insulating fluid 20 may be an electrically insulating liquid in order to prevent a short circuit of a conducting wire connected to the battery cell. The insulating fluid 20 may be made of, for example, a hydrocarbon-based liquid, a silicon compound or a fluorine-based inert liquid.

In this way, the insulating fluid 20 may reduce occurrence of secondary damage such as fire and explosion by distributing heat by fluid flow/convection no matter what thermal runaway occurs in any battery cell 15. However, in order to additionally reduce the occurrence of the secondary damage, partitions 38a, 38b and 38b may be disposed between the cell stacks 10a and 10b and between sidewalls of the housing body 32 and the cell stacks 10a and 10b.

In addition, a plurality of cooling fins 34 protruded to the outside may be formed on sides and a lower surface of the housing body 32. The cooling fins 34 may increase a contact area with the surrounding air and increase heat exchange efficiency, thereby efficiently discharging heat generated inside the housing 30 to the outside.

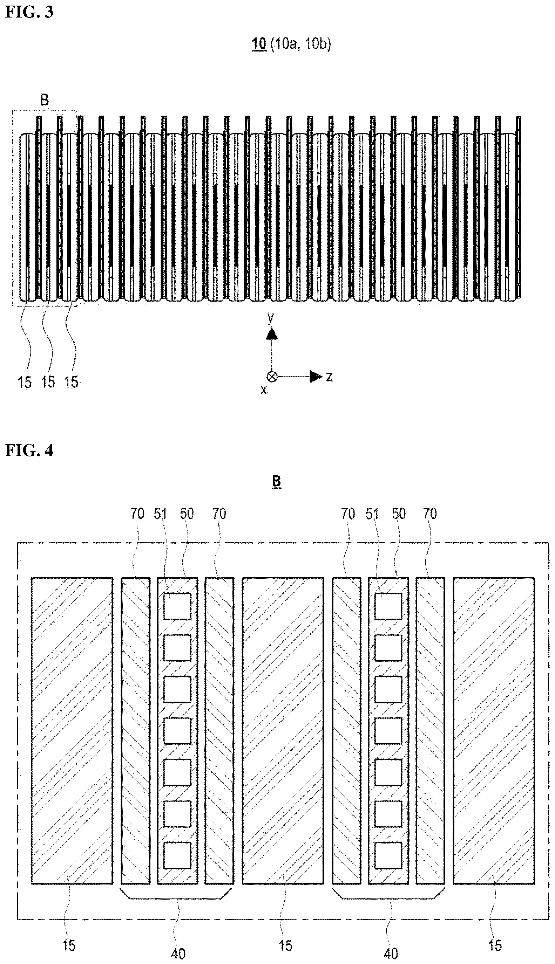

FIG. 3 is a front view illustrating a cell stack 10 including a plurality of battery cells 15 stacked in a specific direction (direction z). The plurality of battery cells 15 may be disposed to be adjacent to each other depending on their capacity in one cell stack 10. A structure in which a plurality of battery cells are stacked to be adjacent to each other may be advantageous in terms of space efficiency (magnitude of battery power per unit volume), but also may have a disadvantage of facilitating thermal runaway propagation. Therefore, a cell spacer assembly 40 capable of increasing such space efficiency and efficiently blocking thermal runaway propagation may be provided between adjacent battery cells 15.

FIG. 4 is an enlarged view illustrating a section B of the front view of the cell stack of FIG. 3.

As shown, the cell stack 10 may include a plurality of battery cells 15 stacked in a stacking direction (direction z) and a cell spacer assembly 40 interposed between two adjacent battery cells 15 among the plurality of battery cells 15. The cell spacer assembly 40 may include a cooling plate 50. The cooling plate 50 may have a first channel 51 penetrated in a longitudinal direction (direction x) to flow the insulating fluid 20, thereby distributing heat. The cooling plate 50 may be at least partially made of aluminum.

Furthermore, the cell spacer assembly 40 may further include at least one insulator 70 interposed between the two adjacent battery cells 15 and the cooling plate 50. The pair of insulators 70 may be made of various materials such as ceramic, urethane, glass and mica, but for the purposes of this explanation, a mica plate having high insulation performance even with a thin thickness is considered to be used as an example. Furthermore, the cell spacer assembly 40 may further include an elastic pad interposed between the pair of insulators 70 and the two adjacent battery cells 15. The elastic pad may be made of silicon, polyurethane foam (PU foam), etc. The cooling plate 50 and the insulator 70 may be bonded to each other by an adhesive, and the insulator 70 and the battery cell may be also bonded to each other by an adhesive.

The configuration of such a cell spacer assembly 40 may prevent the propagation of heat or fire in terms of two aspects in the event of thermal runaway or fire in any one of the plurality of battery cells 15. First, heat transfer is primarily suppressed by the insulator 70 adjacent to the battery cell 15. Nonetheless, when heat or fire spreads to the insulator 70, propagation of the heat or fire to the other battery cells 15 may be secondarily suppressed by the cooling plate 50 interposed between the pair of insulators 70 and the insulating fluid 20 flowing to the channels 51 and 52 inside the cooling plate 50.

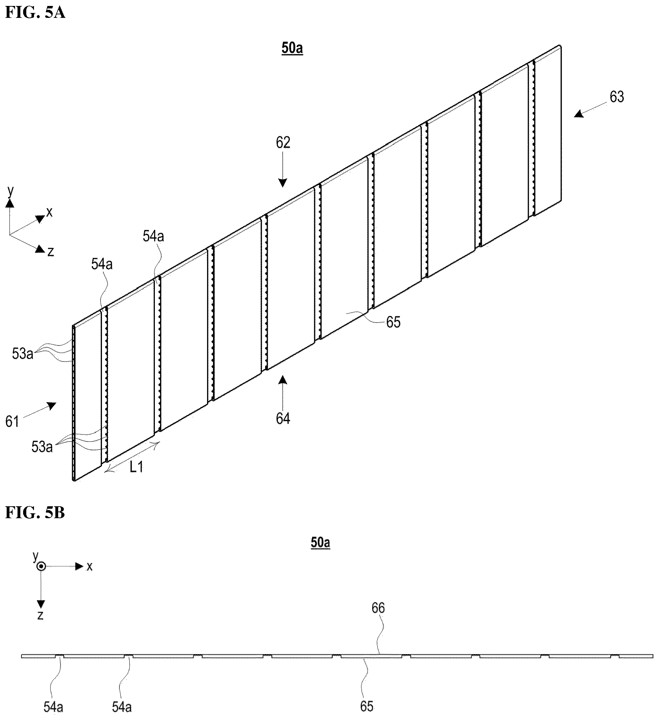

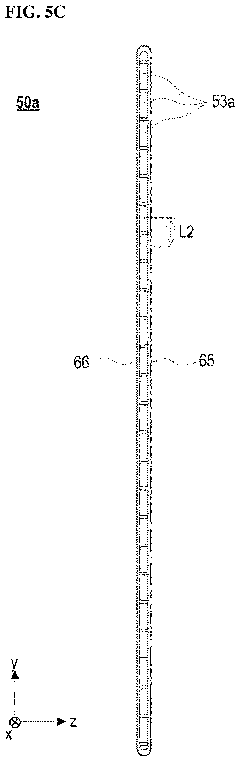

FIG. 5A is a front perspective view illustrating a cooling plate 50a according to an embodiment of the present disclosure, FIG. 5B is a plan view illustrating the cooling plate 50a, and FIG. 5C is a side view illustrating the cooling plate 50a.

The cooling plate 50a may have a first channel 51a formed in a longitudinal direction (direction x) on a plane perpendicular to a stacking direction (direction z) of the battery cells 15 and a second channel 52a formed in a transverse direction (direction y) on the plane. In this case, the longitudinal direction refers to a long side direction of the cooling plate 50a, and the transverse direction refers to a short side direction of the cooling plate 50a.

The first channel 51a and the second channel 52a are connected to be communicated with each other at their crossing position, and the insulating fluid 20 may flow in the longitudinal direction (direction x) and the transverse direction (direction y) through the first channel 51a and the second channel 52a.

In the cooling plate 50a, the first channel 51a may include a plurality of through holes 53a penetrated from a first edge surface 61 of the cooling plate 50a to an edge surface 63 opposite to the first edge surface 61 in the longitudinal direction (direction x). Furthermore, the second channel 52a may include a plurality of trench holes 54a extended from a second edge surface 62 orthogonal to the first edge surface 61 of the cooling plate 50a to an edge surface 64 opposite to the second edge surface 62 in the transverse direction (direction y) and at least partially opened toward a first face surface 65 of two face surfaces 65 and 66 of the cooling plate 50a. The plurality of trench holes 54a may be opened only toward a second face surface 66 of the two face surfaces 65 and 66. In this case, a gap L1 between the plurality of trench holes 54a may be greater than a gap L2 between the plurality of through holes 53a.

In the present disclosure, the term "through hole" means a structure in which all surfaces are closed in a direction in which the hole is extended, and the term "trench hole" means a structure in which one surface is opened in the direction in which the hole is extended. Even in case of the structure of the trench hole in which one surface is opened, since both face surfaces 65 and 66 of the cooling plate 50a are bonded to each other by the insulator 70, the insulating fluid 20 may flow in the longitudinal direction (direction x) without leakage.

In the cooling plate 50a as above, advantages obtained when the first channel 51a is formed of a through hole 53a and the second channel 52a is formed of a trench hole 54b are provided. For example, the cooling plate in which both channels are formed of through holes may not be able to be manufactured by casting or injection. Therefore, a process of forming one channel through casting or injection and then forming the other channel through separate processing or manufacturing the cooling plate into two pieces and then bonding them may be required.

However, when the first channel 51a is formed of a through hole 53a and the second channel 52a is formed of a trench hole 54a, the cooling plate 50a may be manufactured by a single casting or injection process, which may contribute to simplification of the manufacturing process, saving of costs and improvement of manufacturing quality.

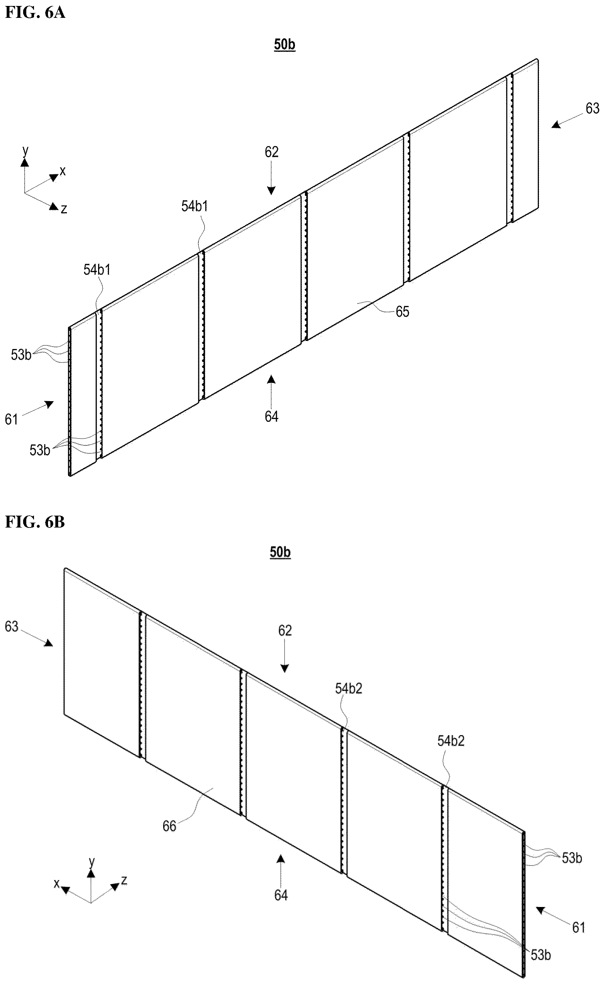

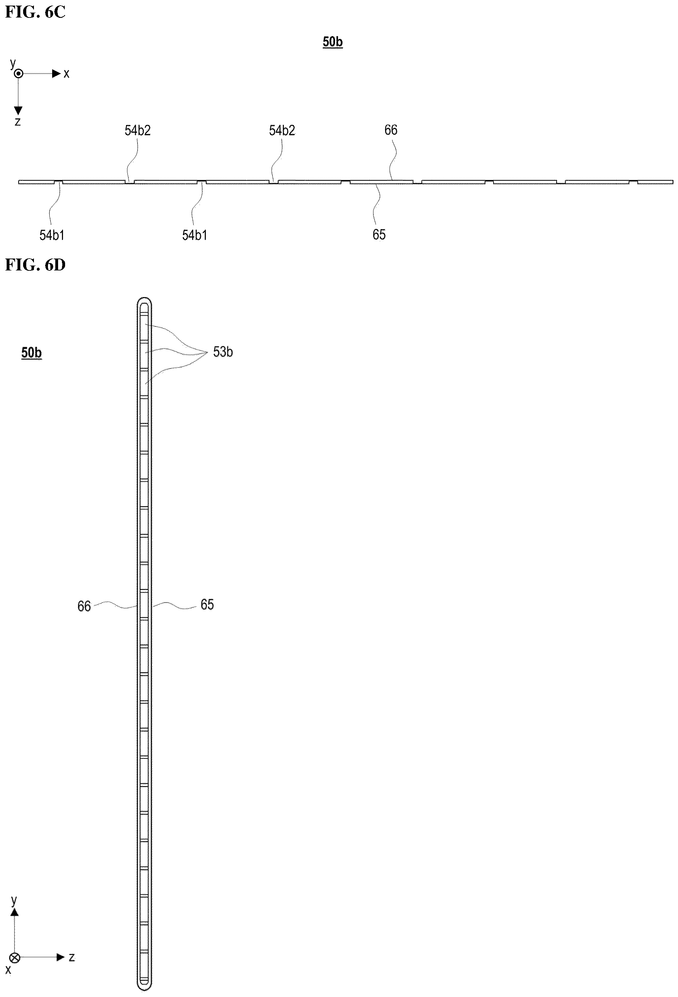

FIG. 6A is a front perspective view illustrating a cooling plate 50b according to an embodiment of the present disclosure, FIG. 6B is a rear perspective view illustrating the cooling plate 50b, FIG. 6C is a plan view illustrating the cooling plate 50b and FIG. 6D is a side view illustrating the cooling plate 50b. The cooling plate shown in FIGS. 6A-6D is similar to the cooling plate shown in FIGS. 5A-5C. However, in the cooling plate of FIGS. 6A-6D, the open surface of the trench hole 54b may be formed on both face surfaces 65 and 66.

Referring to FIGS. 6A to 6D, in the cooling plate 50b, the first channel 51b may include a plurality of through holes 53b penetrated from a first edge surface 61 of the cooling plate 50b to an edge surface 63 opposite to the first edge surface 61 in the longitudinal direction (direction x). Furthermore, the second channel 52b may include a plurality of trench holes 54b extended from a second edge surface 62 orthogonal to the first edge surface 61 of the cooling plate 50b to an edge surface 64 opposite to the second edge surface 62 in the transverse direction (direction y).

A portion 54b1 of the plurality of trench holes 54b may be opened toward the first face surface 65 of the two face surfaces 65 and 66, and the other portion 54b2 of the plurality of trench holes 54b is opened toward the second face surface 66 of the two face surfaces 65 and 66. For example, the trench hole 54b1 that is opened toward the first face surface 65 and the trench hole 54b2 that is opened toward the second face surface 66 may be disposed in alternating arrangement.

In this way, when the direction in which the trench hole 54b is opened is disposed toward different face surfaces, a balanced heat transfer by the flow of the insulating fluid 20 may be more enhanced than the case that the trench hole 54b is disposed toward one face surface. Further, since the first channel 51b is formed of a through hole 53b and the second channel 52b is formed of a trench hole 54b, the cooling plate 50b may be manufactured by a single casting or injection process.

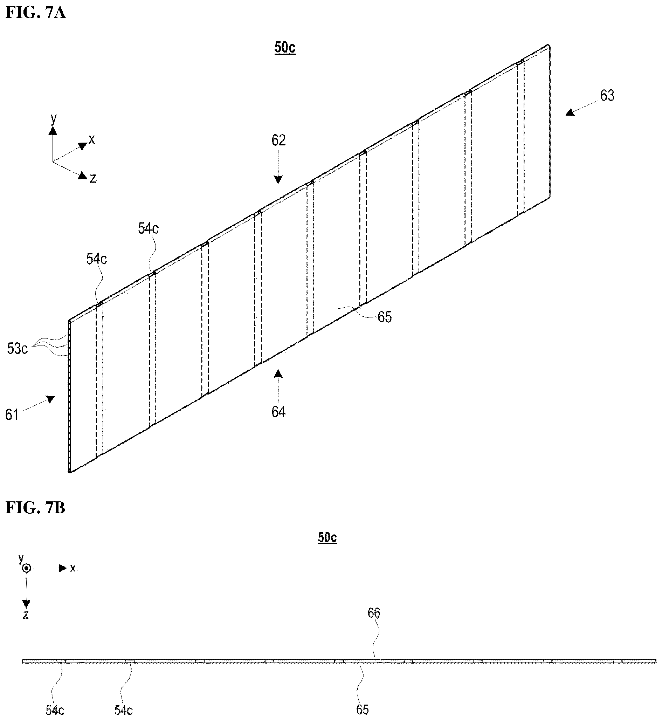

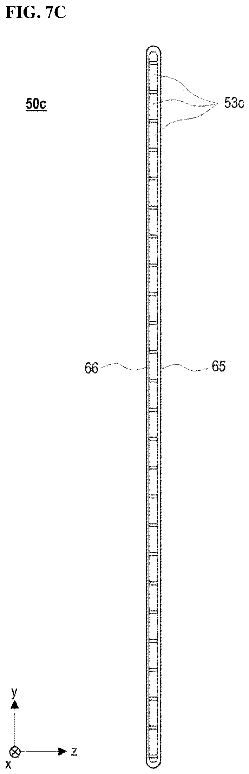

FIG. 7A is a perspective view illustrating a cooling plate 50c according to an embodiment of the present disclosure, FIG. 7B is a plan view illustrating the cooling plate 50c, and FIG. 7C is a side view illustrating the cooling plate 50c.

With respect to the cooling plate 50c shown in FIG. 7A-7C, both a first channel 51c and a second channel 52c may include a plurality of through holes 53c and 54c. The first channel 51c may include a plurality of through holes 53c penetrated from a first edge surface 61 of the cooling plate 50c to an edge surface 63 opposite to the first edge surface 61 in the longitudinal direction (direction x). Furthermore, the second channel 52c may include a plurality of through holes 54d extended from a second edge surface 62 orthogonal to the first edge surface 61 of the cooling plate 50c to an edge surface 64 opposite to the second edge surface 62 in the transverse direction (direction y).

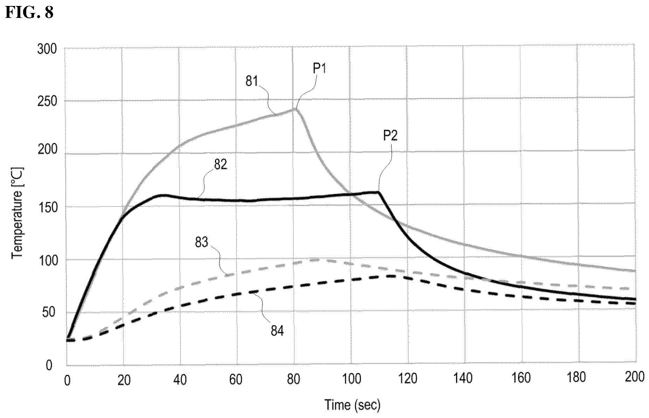

FIG. 8 is a graph illustrating a thermal conduction test result of a cell spacer assembly 40 according to an embodiment of the present disclosure in comparison with that of the related art.

Sample 1 used in the test of FIG. 8 is a case that a cooling plate with only one channel formed in the longitudinal direction is used like the related art, and Sample 2 is a case that a cooling plate with two channels communicated with each other while crossing each other is used like the embodiments of the present disclosure. In this case, a thickness of the cooling plate is 2.5mm, and a thickness of the mica plate used as the insulator is 0.54mm.

In order to form a situation similar to thermal runaway, a thin type heater was installed toward a first battery cell of two adjacent battery cells. In addition, a first temperature sensor (thermocouple) was installed on the insulator adjacent to the first battery cell, and a second temperature sensor was installed on the next insulator disposed after the cooling plate.

Referring to FIG. 8, a graph 81 represents the result of measuring the heated sample 1 by the first temperature sensor, and a graph 83 represents the result of measuring the heated sample 1 by the second temperature sensor. Also, a graph 82 represents the result of measuring the heated sample 2 by the first temperature sensor, and a graph 84 represents the result of measuring the heated sample 2 by the second temperature sensor. In the graphs 81 and 82, peaks P1 and P2 represent positions at which the operation of the heater has been stopped, respectively. Accordingly, it is noted that in the sample 2, the heater was operated for more than 100 seconds, but in the sample 2, the heater was operated for only about 80 seconds. This means that the heater was stopped before reaching 250°C because the sample 1 was overheated during the test.

Referring to FIG. 8, a temperature 84 of the sample 2 is generally lower than a temperature 83 of the sample 1 even at a position of the second temperature sensor (position of the insulator one space away from the battery cell). In addition, it may be seen that a temperature 82 of sample 2 is remarkably lower than a temperature 81 of sample 1 at a position of the first temperature sensor (position of the insulator adjacent to the battery cell). In addition, the temperature 82 of the sample 2 shows a pattern in which a maximum temperature of the heater converges to a level slightly above 150°C even though the heater is continuously operating. Since the heating time of the sample 2 was actually longer than the heating time of the sample 1 as much as 30 seconds, the difference would be greater based on the same heating time.

In the submersible energy storage device comprising a cell spacer assembly according to some embodiments, performance and lifespan of stacked battery cells may be improved.

In the submersible energy storage device comprising a cell spacer assembly according to some embodiments, the possibility of a secondary accident such as fire, explosion and harmful gas emission may be reduced by effective use of an insulating fluid even in the event of a thermal runaway phenomenon.

However, the effects according to some embodiments of the present disclosure are not limited to those mentioned above.

Although the embodiments of the present disclosure have been described with reference to the accompanying drawings, it will be apparent to those skilled in the art that the present disclosure can be embodied in other specific forms without departing from the technical spirits and essential characteristics of the present disclosure. Thus, the above-described embodiments are to be considered in all respects as illustrative and not restrictive.

## Claims

1. A submersible energy storage device comprising:
a housing having an accommodation space therein;
a cell stack in the housing; and
an insulating fluid in the accommodation space, in which the cell stack is immersed, and configured to cool the cell stack,
wherein the cell stack comprises a plurality of battery cells stacked in a stacking direction, and a cell spacer assembly provided between two adjacent battery cells among the plurality of battery cells,
wherein the cell spacer assembly comprises a cooling plate having a first channel along a first direction of a plane perpendicular to the stacking direction of the plurality of battery cells and a second channel along a second direction of the plane,
wherein the first channel and the second channel are in fluid communication through a crossing position that connects the first channel and the second channel, and
wherein the insulating fluid is capable of flowing in the first direction and the second direction through the first channel and the second channel, respectively.

2. The submersible energy storage device of claim 1, wherein the first direction corresponds to a longitudinal direction of the cooling plate, and the second direction corresponds to a transverse direction crossing the longitudinal direction of the cooling plate.

3. The submersible energy storage device of claim 2, wherein a length of the cooling plate in the longitudinal direction is greater than a length of the cooling plate in the transverse direction.

4. The submersible energy storage device of claim 1, wherein the cell spacer assembly further comprises at least one insulator provided between the two adjacent battery cells and the cooling plate.

5. The submersible energy storage device of claim 4, wherein the at least one insulator includes a mica plate.

6. The submersible energy storage device of claim 2, wherein, in the cooling plate, the first channel comprises a plurality of through holes extended from a first edge surface of the cooling plate to an edge surface opposite to the first edge surface in the longitudinal direction, and
wherein the second channel comprises a plurality of trench holes extended from a second edge surface of the cooling plate, orthogonal to the first edge surface, to an edge surface opposite to the second edge surface in the transverse direction, and opened toward at least one face among a first face and a second face of the cooling plate.

7. The submersible energy storage device of claim 6, wherein a gap between adjacent trench holes is greater than a gap between adjacent through holes.

8. The submersible energy storage device of claim 6, wherein the plurality of trench holes are opened only toward the first face among the first face and the second face.

9. The submersible energy storage device of claim 6, wherein one or more first trench holes among the plurality of trench holes are opened toward the first face among the first face and the second face, and one or more second trench holes among the plurality of trench holes are opened toward the second face among the first face and the second face.

10. The submersible energy storage device of claim 9, wherein the one or more first trench holes opened toward the first face and the one or more second trench holes opened toward the second face are provided in an alternating arrangement.

11. The submersible energy storage device of claim 1, wherein the housing comprises a housing body in which the cell stack and the insulating fluid are provided, and a housing cover covering an upper opening of the housing body, and
the housing cover comprises a gas vent configured to discharge gas generated inside the housing.

12. The submersible energy storage device of claim 11, wherein the housing body comprises a plurality of cooling fins configured to exchange heat with surrounding air and protruded on at least one among a side and a lower surface of the housing body.

13. The submersible energy storage device of claim 4, wherein the cell spacer assembly further comprises an elastic pad between the at least one insulator and the two adjacent battery cells.

14. The submersible energy storage device of claim 13, wherein the cooling plate is bonded to the at least one insulator by an adhesive.

15. A storage device comprising:
a first battery cell and a second battery cell layered in a stacking direction;
a cooling plate provided between the first battery cell and the second battery cell and comprising:
a first channel along a first direction of a plane perpendicular to the stacking direction, and
a second channel along a second direction of the plane orthogonal to the first direction and the stacking direction; and
an insulating fluid configured to cool the first battery cell and the second battery cell and capable of flowing in the first direction and the second direction through the first channel and the second channel.

## Amended claims

### Amended claims in accordance with Rule 137(2) EPC.

1. A energy storage device (100) comprising:
a housing (30) having an accommodation space (35) therein;
a cell stack (10, 10a, 10b) in the housing (30); and
an insulating fluid (20) in the accommodation space (35), in which the cell stack (10, 10a, 10b) is immersed, and configured to cool the cell stack (10, 10a, 10b),
wherein the cell stack (10, 10a, 10b) comprises a plurality of battery cells (15) stacked in a stacking direction, and a cell spacer assembly (40) provided between two adjacent battery cells (15) among the plurality of battery cells (15),
wherein the cell spacer assembly (40) comprises a cooling plate (50, 50a) having a first channel (51, 53a) along a first direction of a plane perpendicular to the stacking direction of the plurality of battery cells (15) and a second channel (52a[???], 54a) along a second direction of the plane,
wherein the first channel (51) and the second channel (52a) are in fluid communication through a crossing position that connects the first channel (51) and the second channel (52a),
wherein the insulating fluid (20) is capable of flowing in the first direction and the second direction through the first channel (51) and the second channel (52a), respectively, and
wherein the first direction corresponds to a longitudinal direction of the cooling plate (50, 50a), and the second direction corresponds to a transverse direction crossing the longitudinal direction of the cooling plate (50, 50a),
**characterized in that**,
in the cooling plate (50, 50a), the first channel (51) comprises a plurality of through holes (53a) extended from a first edge surface (61) of the cooling plate (50, 50a) to an edge surface (63) opposite to the first edge surface (61) in the longitudinal direction, and
wherein the second channel (52a) comprises a plurality of trench holes (54a) extended from a second edge surface (62) of the cooling plate (50, 50a), orthogonal to the first edge surface (61), to an edge surface (64) opposite to the second edge surface (62) in the transverse direction, and opened toward at least one face among a first face and a second face of the cooling plate (50, 50a).

2. The energy storage device (100) of claim 1, wherein a length of the cooling plate (50, 50a) in the longitudinal direction is greater than a length of the cooling plate (50, 50a) in the transverse direction.

3. The energy storage device (100) of claim 1, wherein a gap between adjacent trench holes (54a) is greater than a gap between adjacent through holes (53a).

4. The energy storage device (100) of claim 1, wherein the plurality of trench holes (54a) are opened only toward the first face among the first face and the second face.

5. The energy storage device (100) of claim 1, wherein one or more first trench holes (54b1) among the plurality of trench holes (54b1, 54b2) are opened toward the first face among the first face and the second face, and one or more second trench holes (54b2) among the plurality of trench holes (54b1, 54b2) are opened toward the second face among the first face and the second face.

6. The energy storage device (100) of claim 5, wherein the one or more first trench holes (54b1) opened toward the first face and the one or more second trench holes (54b2) opened toward the second face are provided in an alternating arrangement.
